# EUROPÄISCHE PATENTANMELDUNG

(11) **EP 3 527 428 A1**
(43) Veröffentlichungstag der Anmeldung: **21.08.2019**
(21) Anmeldenummer: 19150724.3
(22) Anmeldetag: 08.01.2019
(51) Int. Cl.: B60R 9/042

(54) **DACHTRÄGER**

(30) Priorität: 15.02.2018 DE 102018103435
(71) Anmelder: Sortimo International GmbH, 86441 Zusmarshausen (DE)
(72) Erfinder: Müller, Andreas, 86156 Augsburg (DE); Baumeister, Jonas, 86424 Dinkelscherben (DE); Unger, Thomas, 86424 Dinkelscherben (DE); MERKLE, Bernd, 89343 Jettingen/Scheppach (DE)
(74) Vertreter: Charrier Rapp & Liebau

(57) **Zusammenfassung**

Die Erfindung betrifft einen Dachträger (1) mit einem auf dem Dach eines Kraftfahrzeugs montierbaren Gestell (2), auf welchem eine Schiene (8) angeordnet ist, entlang der eine Auflage (3) für einen zu transportierenden Gegenstand zwischen einer Transportposition (Fig. 1), in der sich die Auflage (3) über der Schiene (8) befindet, und einer Zwischenposition (Fig. 2), in der sich die Auflage (3) seitlich in Verlängerung der Schiene (8) befindet, verschiebbar ist, und die Anordnung aus Schiene (8) und Auflage (3) zwischen der Zwischenposition (Fig. 2) und einer Ladeposition (Fig. 4), in der sich Schiene (8) und Auflage (3) in einem stumpfen Winkel zu dem Gestell (2) befinden, verschwenkbar ist. Bekannte derartige Dachträger sind in der Bedienung nicht optimal sicher und bequem.

Die Aufgabe, einen Dachträger so weiterzubilden, dass ein sicherer und bequemer Transport von Leitern und anderen langen Gegenständen gegeben ist, wird gelöst durch eine Rückhaltevorrichtung, welche die gemeinsame Verschwenkung von Schiene (8) und Auflage (3) gegenüber dem Gestell (2) erst in der Zwischenposition (Fig. 2) freigibt.

## Beschreibung

Die Erfindung betrifft einen Dachträger nach dem Oberbegriff des Anspruchs 1.

Ein solcher Dachträger dient vornehmlich zum Transport von Gegenständen, insbesondere von Leitern auf einem Fahrzeugdach. Aufgrund der Sperrigkeit und Unhandlichkeit von Leitern kommt es im Transportraum eines Fahrzeugs zu Unterbringungsproblemen.

Aus der US 5 884 824 A ist ein sogenannter Leiternlift bekannt, der über Trägerschienen auf einem Fahrzeugdach befestigbar ist. Der Leiternlift umfasst zwei parallel verlaufende Gleitschienen, die teleskopisch horizontal nach außen ausgezogen werden können, wobei sich an einem Ende die Gleitschienen von ihrer Verriegelung lösen. Damit können die Gleitschienen mitsamt Führungsrahmen über eine Drehachse geschwenkt werden.

Aus der US 9 630 565 B2 ist ein Ladesystem zum Be- und Entladen auf dem Dach eines Fahrzeugs bekannt, wobei das Ladesystem einen Grundrahmen zur Befestigung am Fahrzeug aufweist. Ferner zeigt das Ladesystem einen Laderahmen der mit dem Grundrahmen verbunden und bezüglich des Grundrahmens über eine Drehachse schwenkbar ist. Der Laderahmen umfasst ein Zwischenspannglied, das um eine Zwischenspannachse relativ zum Grundrahmen drehbar ist.

Die US 9 914 400 B1 zeigt einen Dachträger mit einem auf dem Dach eines Kraftfahrzeug montierbaren Gestell, auf welchem eine Schiene angeordnet ist, entlang der eine Auflage für einen zu transportierenden Gegenstand zwischen einer Transportposition und einer Zwischenposition verschiebbar ist, wobei die Anordnung aus Schiene und Auflage zwischen der Zwischenposition und einer Ladeposition, in der sich Schiene und Auflage in einem stumpfen Winkel zu dem Gestell befinden, verschwenkbar ist. Es ist auch eine Rückhaltevorrichtung zur gemeinsamen Verschwenkung von Schiene und Auflage gegenüber dem Gestell erst in der Zwischenposition vorgesehen.

Ein Leiternlift, der zwei Schlitten und einen Rahmen umfasst, wobei die beiden Schlitten in dem Rahmen des Leiternlifts nach außen geschoben werden können, ist aus der GB 2 454 680 A1 bekannt. Wenn die beiden Schlitten sich in der äußeren ausgezogenen Position befinden, können sie nach unten geschwenkt werden.

Es besteht die Aufgabe, eine gattungsgemäße Vorrichtung, wie in der eingangs genannten Druckschrift beschrieben, so weiterzubilden, dass ein sicherer und bequemer Transport von Leitern und anderen langen Gegenständen gegeben ist.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird nachfolgend unter Bezugnahme auf die begleitenden Zeichnungen näher erläutert. Diese zeigen:
- **Fig. 1:**: eine Vorderansicht eines erfindungsgemäßen Dachträgers in einer Transportposition;
- **Fig. 2:**: eine Ansicht des in Figur 1 dargestellten Dachträgers in einer Zwischenposition vor Beginn der Verschwenkung;
- **Fig. 3:**: eine Darstellung des Dachträgers gemäß Figur 2 in der Zwischenposition nach Beginn des Verschwenkens;
- **Fig. 4:**: eine Darstellung des in den Figuren 1 bis 3 dargestellten Dachträgers in einer Ladeposition;
- **Fig. 5:**: einen Querschnitt entlang der Linie A-A aus Figur 1;

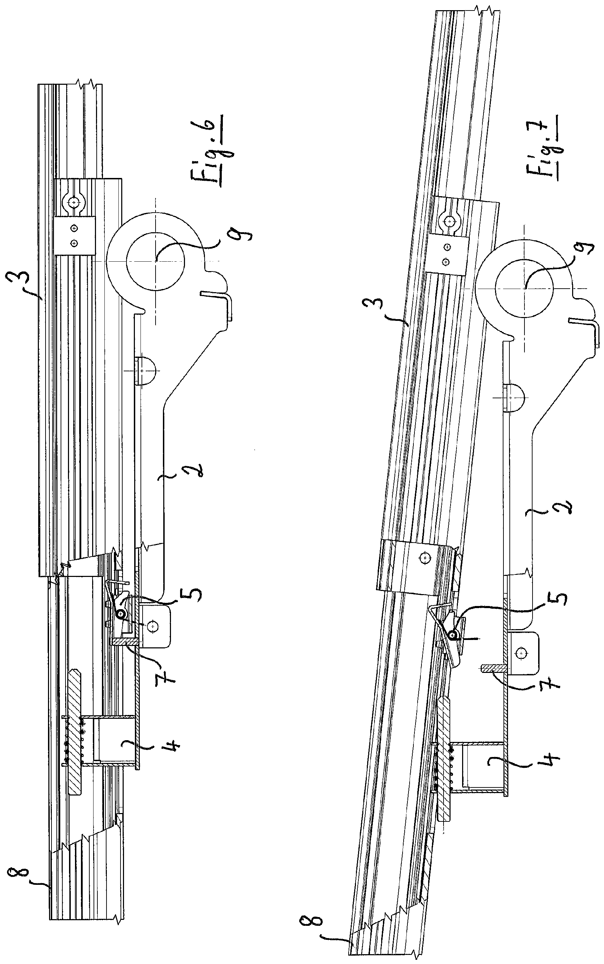

- **Fig. 6:**: eine vergrößerte Darstellung der Ansicht aus Figur 2 ohne Darstellung der Schiene, sondern nur mit Darstellung der Auflage;
- **Fig. 7:**: eine vergrößerte Darstellung der Figur 3, ohne Darstellung der Schiene, sondern nur der Auflage.

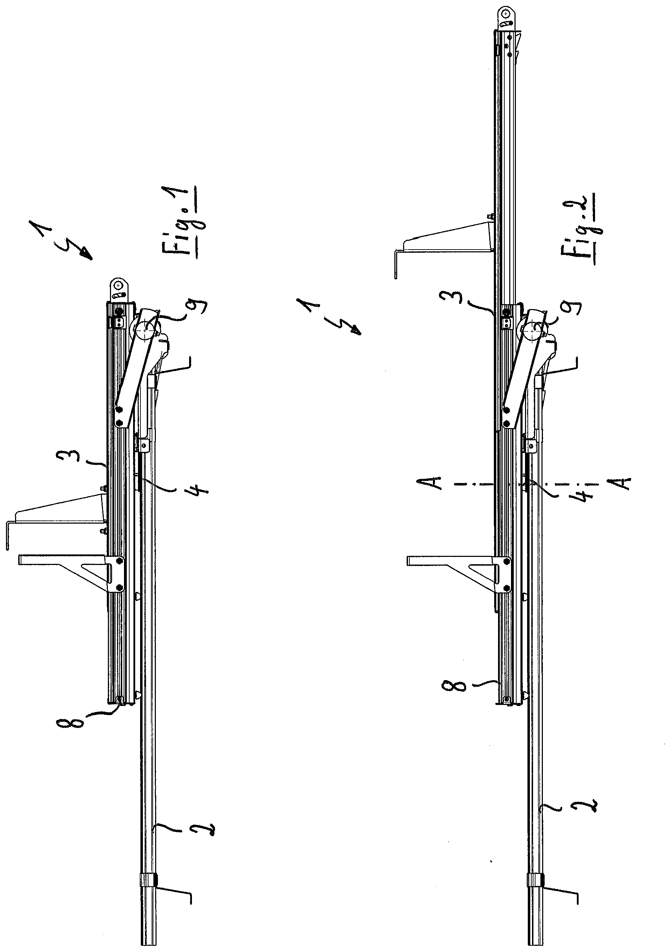

In den Figuren 1 und 2 ist eine auf dem Dach eines Kraftfahrzeugs über ein Gestell 2 befestigbare Schiene 8 dargestellt, entlang der eine Auflage 3 für den zu transportierenden Gegenstand, beispielsweise eine Leiter, gleitend bewegbar ist. Die Auflage 3 ist ein Profil, insbesondere ein Aluminium- oder Stahlprofil, ebenso die Schiene 8. Die Verbindung zwischen Auflage 3 und Schiene 8 ist dergestalt, dass nur eine gleitende, nicht aber eine verkippende Bewegung zwischen Auflage 3 und Schiene 8 möglich ist. Auflage 3 und Schiene 8 sind somit immer, also in jeder der nachfolgend dargestellten Positionen, kolinear.

Die Schiene 8 ist auf einem Gestell 2 angeordnet, welches über an sich bekannte Befestigungsmittel auf dem Dach eines Kraftfahrzeugs befestigt ist. Hierbei kann es sich um dauerhafte Befestigungen durch Verschraubung des Gestells auf dem Dach des Kraftfahrzeugs handeln oder um temporäre Befestigungen, wobei das Gestell an das Dach, z.B. an eine Dachreling oder Regenrinnen an dem Dach, angeschraubt werden kann.

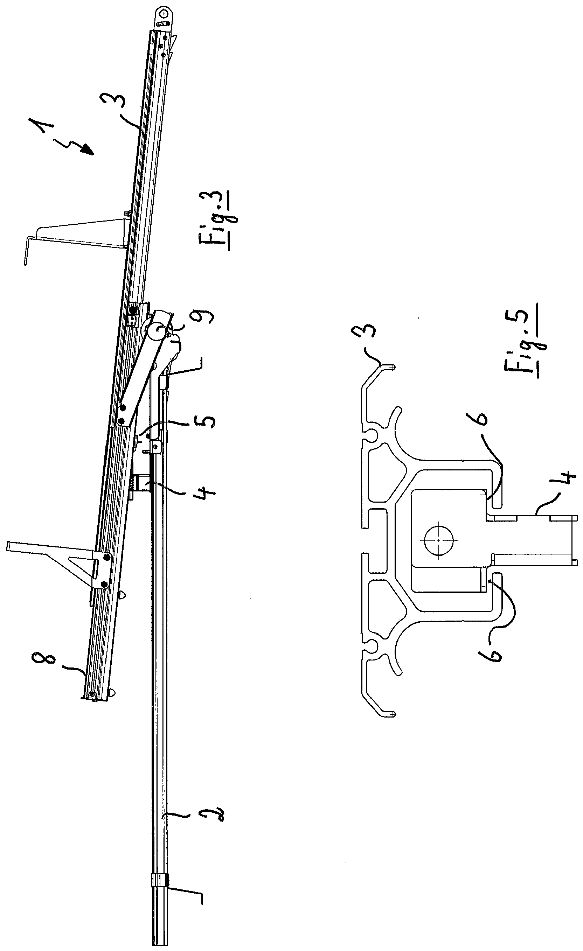

Fest an dem Gestell 2 ist, wie Fig. 3 zu entnehmen ist, ein nach oben ragendes Rohrstück 4 aus einem Vierkantrohr befestigt, welches eine Öffnung in der Schiene 8 durchgreift. Das im Einzelnen in Fig. 5 dargestellte Rohrstück 4 weist an seinen zwei gegenüberliegenden, nach außen ragenden - in Fahrtrichtung des Fahrzeugs in Querrichtung - Seiten zwei Auskragungen 6 auf.

Von dem Rohrstück 4 gesehen in Richtung der Außenseite des Fahrzeugs ist auf dem Gestell eine nach oben ragende Nase 7 angeordnet.

In der in den Figuren 1 und 5 dargestellten Transportposition untergreift das Profil der Auflage 3 die Auskragungen an dem Rohrstück 4, so dass ein Verschwenken der Schiene 8 gegenüber dem Gestell 2 unmöglich ist, weil Schiene 8 und Auflage 3 durch aneinander angepasste Profile kolinar miteinander gekoppelt sind.

An der Schiene 8, neben der Öffnung für das Rohrstück 4 in Richtung der Fahrzeugaußenseite, befindet sich eine Wippe 5, welche in der in der Figur 2 dargestellten Transportstellung dadurch niedergedrückt wird, dass die in der Zeichnung links dargestellte Seite der Wippe auf der Nase 7 aufliegt, wodurch die in der Figur rechts dargestellte Seite der Wippe 5 aufgrund der dazwischen liegenden, in Fahrzeuglängsrichtung orientierten Schwenkachse der Wippe 5 nach unten gedrückt wird. Hierdurch kann die Wippe 5 von dem Profil der Auflage 3 übergriffen werden, welches sich in der Transportstellung über der Wippe 5 und auch über dem Rohrstück 4 befindet.

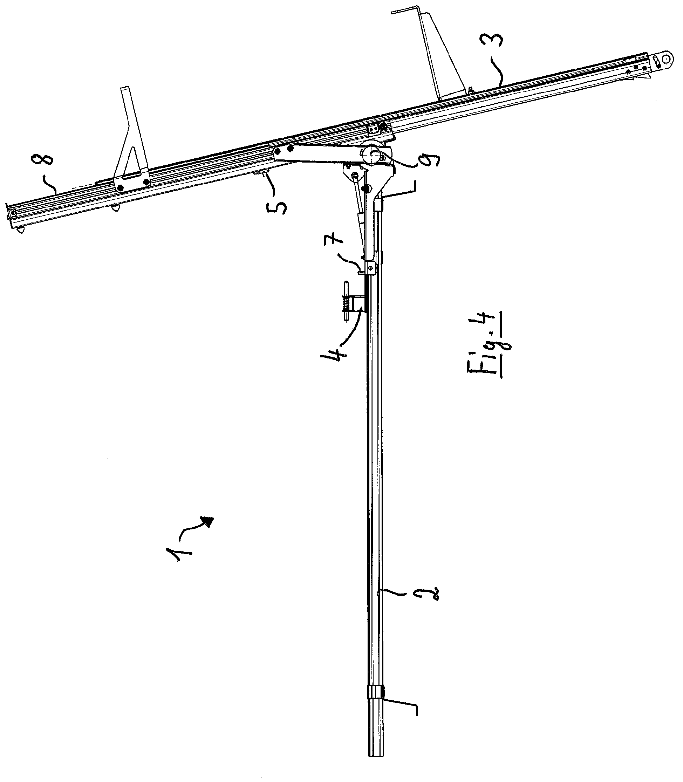

Um von der in Figur 1 dargestellten Transportstellung in die in den Figuren 2 bzw. 3 dargestellte Zwischenposition zu gelangen, zieht man die Auflage 3 an einem (nicht dargestellten) Handgriff nach außen, wobei zunächst das Rohrstück 4 und anschließend die Wippe 5 freigegeben werden. Hierbei bewegt sich die Wippe 5 aufgrund ihrer Blockierung durch die Nase 7 an dem Rohrstück 4 jedoch zunächst noch nicht. Sobald das Profil der Auflage 3 über die Auskragungen 6 des Rohrstücks 4 gezogen worden ist kann die Auflage 3 zusammen mit der Schiene 8 um die in Fahrzeuglängsrichtung orientierte Drehachse 9 gekippt werden. Dies entspricht der in Fig. 2 dargestellten Zwischenposition. Die Anordnung aus Schiene 8 und Auflage 3 kann nun über die in Figur 3 dargestellte angekippte Position bis in die Ladeposition gemäß Figur 4 nach unten gekippt werden, wobei die Kombination aus Schiene 8 und Auflage 3 fast senkrecht nach oben orientiert ist.

Bewegt man die Anordnung aus Schiene 8 und Auflage 3 dann wieder von der Ladeposition in Richtung der Zwischenposition, blockiert die dann betätigte Wippe 5 das weitere Einschieben der Auflage 3 in die Schiene 8, da sie nach oben gerichtet ist, solange sich die Schiene 8 gegenüber dem Gestell 2 in einer angewinkelten Position befindet. Erst wenn man die Anordnung aus Schiene 8 und Auflage 3 soweit nach unten gedrückt hat, dass die Schiene 8 wieder absolut horizontal auf dem Gestell 2 liegt, wird die linke Seite der Wippe 5 durch die Nase 7 betätigt und die rechte Seite schwenkt nach unten und gibt somit den Weg für das weitere Einschieben der Auflage 3 auf der Schiene 8 frei. Die Auflage 3 kann dann ohne Weiteres über die Wippe 5 und das Rohrstück 4 geschoben werden, wobei die Auskragungen 6 des Rohrstücks 4 wiederum von dem Profil der Auflage 3 untergriffen werden. Hierdurch wird die Anordnung gegen ein erneutes Verkippen gesichert.

Um die Auflage 3 in der Transportposition gemäß Fig. 1 vor einem unbeabsichtigten Verrutschen gegenüber der Schiene 8 zu sichern weist der erfindungsgemäße Dachträger einen im Bereich des Griffs befindlichen Sicherungshaken auf. Hierbei handelt es sich um einen mit einer Ringfeder vorbelasteten Haken, der beim vollständigen Einschieben der Auflage 3 in die Schiene 8 über ein Gegenblech mit einer Ausnehmung geschoben wird, wobei der Widerhaken des Sicherungshakens in die Ausnehmung eingreift und unter dem Federdruck in dieser Position verbleibt.

Zum Lösen des Sicherungshakens muss der Haken manuell nach oben gegen die Kraft der Ringfeder verschwenkt werden. Da der Widerhaken in die schienenfeste Öffnung eingreift muss hierzu die Auflage über den Griff leicht in Richtung der Fahrzeugmitte verschoben werden. Anschließend kann die Auflage über den Griff herausgezogen werden.

Vorzugsweise ist der erfindungsgemäße Dachträger Teil einer aus zwei gleichartigen Dachträgern bestehenden Dachträgeranordnung, wobei die beiden Dachträger der Anordnung auf dem Dach eines Kraftfahrzeugs befestigbar sind und die zu transportierenden langen Gegenstände gemeinsam aufnehmen.

## Patentansprüche

1. Dachträger (1) mit einem auf dem Dach eines Kraftfahrzeugs montierbaren Gestell (2), auf welchem eine Schiene (8) angeordnet ist, entlang der eine Auflage (3) für einen zu transportierenden Gegenstand zwischen einer Transportposition (Fig. 1), in der sich die Auflage (3) über der Schiene (8) befindet, und einer Zwischenposition (Fig. 2), in der sich die Auflage (3) seitlich in Verlängerung der Schiene (8) befindet, verschiebbar ist, und die Anordnung aus Schiene (8) und Auflage (3) zwischen der Zwischenposition (Fig. 2) und einer Ladeposition (Fig. 4), in der sich Schiene (8) und Auflage (3) in einem stumpfen Winkel zu dem Gestell (2) befinden, verschwenkbar ist, **gekennzeichnet durch** eine Rückhaltevorrichtung, welche die gemeinsame Verschwenkung von Schiene (8) und Auflage (3) gegenüber dem Gestell (2) erst in der Zwischenposition (Fig. 2) freigibt.

2. Dachträger nach Anspruch 1, **dadurch gekennzeichnet, dass** die Rückhaltevorrichtung als auf dem Gestell (2) angeordnetes Rohrstück (4) ausgebildet ist, welches eine Öffnung in der Schiene (8) durchgreift und an seiner Oberseite nach außen ragende Auskragungen (6) aufweist, unter welche ein entsprechend gestaltetes Profil der Auflage (3) in der Transportposition (Fig. 1) und während des Verschiebens von der Transportposition (Fig. 1) in die Zwischenposition (Fig. 2) eingreift.

3. Dachträger nach einem der voranstehenden Ansprüche, **gekennzeichnet durch** eine an der Schiene (8) angeordnete Wippe (5), welche die Bewegung der Auflage (3) gegenüber der Schiene (8) von der Ladeposition (Fig. 4) in die Transportposition (Fig. 1) bis zum Erreichen der Zwischenposition (Fig. 2) blockiert und erst freigibt, wenn die Anordnung aus Schiene (8) und Auflage (3) vollständig auf dem Gestell (2) aufliegt.

4. Dachträger nach Anspruch 3, **dadurch gekennzeichnet, dass** die Wippe (5) an der Schiene (8) neben der Öffnung für das Rohrstück (4), in Richtung der Fahrzeugaußenseite, angeordnet ist.

5. Dachträger nach Anspruch 4, **dadurch gekennzeichnet, dass** die Wippe (5) beim Kippen der Anordnung aus Schiene (8) und Auflage (3) in die Transportstellung auf einer an dem Gestell (2) angeordneten Nase (7) aufliegt, betätigt wird und somit das weitere Einschieben der Auflage (3) über die Schiene (8) ermöglicht.

6. Dachträger nach einem der voranstehenden Ansprüche, **dadurch gekennzeichnet, dass** die Auflage (3) einen Handgriff zu dessen Betätigung aufweist.

7. Dachträger nach Anspruch 6, **dadurch gekennzeichnet, dass** der Handgriff einen Sicherungshaken zum Schutz gegen unbeabsichtigte Betätigung aufweist.

8. Dachträgeranordnung, **gekennzeichnet durch** zwei Dachträger nach einem der voranstehenden Ansprüche, welche im Abstand zueinander auf dem Dach eines Kraftfahrzeugs montierbar sind.
